# FASCICULE DE BREVET EUROPEEN

(11) **EP 2 888 175 B1**
(45) Date de publication et mention de la délivrance du brevet: **26.04.2017**
(21) Numéro de dépôt: 13785618.3
(22) Date de dépôt: 26.08.2013
(51) Int. Cl.: B65D 19/12

(54) **CAISSE METALLIQUE REPLIABLE**
ZUSAMMENKLAPPBARER METALLISCHER BEHÄLTER
COLLAPSIBLE METAL BOX

(30) Priorité: 27.08.2012 FR 1258005
(43) Date de publication de la demande: 01.07.2015
(73) Titulaire: Groupe Arnaud, 33730 Prechac (FR)
(72) Inventeur: ARNAUD, Benoît, F-33520 Bruges (FR); BAUS, Jean-François, F-33110 Le Bouscat (FR); BODOLEC, Jean-Laurent, F-33720 Podensac (FR); MARLY, Vincent, Totton Hampshire SO40 3PQ (GB)
(74) Mandataire: Nony
(86) Numéro de dépôt international: PCT/IB2013/056884
(87) Numéro de publication internationale: WO 2014/033608

(56) Documents cités:
- DE-U1- 9 012 097
- US-A- 3 635 368
- US-A1- 2006 226 143

## Description

La présente invention concerne une caisse métallique repliable, notamment de transport d'un matériau sensible au fluage, par exemple du caoutchouc synthétique conditionné en balles, ainsi qu'un procédé pour vider une caisse selon l'invention.

Des caisses adaptées notamment au transport de matériaux fluables comme le caoutchouc sont connues par exemple de la demande FR 2 653 094 qui divulgue des caisses empilables.

Le brevet GB 2 445 878 ainsi que le brevet EP 1 633 641 du demandeur divulguent une caisse comportant des côtés repliables qui peuvent être verrouillés de façon réversible lors du montage de la caisse. Un autre exemple d'une caisse est décrit dans DE9012097U. Par caisse repliable, on entend une caisse dont on peut rabattre les panneaux vers l'intérieur ou vers l'extérieur.

Dans la présente demande, les termes vertical/horizontal, supérieur/inférieur, haut/bas, dessus/dessous, extérieur/intérieur et autres termes d'orientation doivent être compris relativement à un observateur se trouvant devant la caisse posée à l'endroit sur une surface plane horizontale.

Il est difficile de vider totalement les caisses existantes, le matériau transporté ayant tendance, lors du transport, à épouser au plus près la forme intérieure des parois de la caisse, en particulier au fond de la caisse. Il est souvent nécessaire de démonter les parois latérales pour pouvoir vider les couches inférieures qui restent, sinon, coincées.

Il existe un besoin pour renforcer les caisses métalliques repliables existantes.

Il existe également un besoin pour bénéficier d'une caisse métallique repliable à usage multiple, et pour permettre d'utiliser au mieux le volume intérieur d'une caisse métallique repliable lors de son remplissage.

Il existe aussi un besoin pour bénéficier d'une caisse métallique repliable permettant de replier et de déplier les panneaux latéraux de façon simple et rapide lors de l'utilisation de la caisse.

Il existe également un besoin pour faciliter les opérations de manutention et de remplissage et vidage de ces caisses.

Il existe également un besoin pour bénéficier d'une caisse métallique repliable permettant d'utiliser au mieux l'espace disponible dans les conteneurs maritimes.

L'invention vise à répondre à tout ou partie des besoins précités.

Selon un premier aspect, l'invention a pour objet une caisse métallique repliable, notamment de transport d'un matériau sensible au fluage, comportant une base, deux premiers et deux seconds panneaux latéraux opposés, articulés sur la base, au moins l'un des premiers panneaux latéraux comportant des moyens de maintien pour le maintenir seul dans une position debout sur la base alors que les seconds panneaux latéraux sont totalement dépliés vers l'extérieur.

Cette position est particulièrement avantageuse lors du vidage de la caisse. Il n'est pas nécessaire de démonter un voire plusieurs panneaux latéraux pour vider complètement la caisse. L'accès à la marchandise transportée, y compris pour les couches inférieures, est facilité grâce aux seconds panneaux latéraux totalement dépliés vers l'extérieur.

Les deux premiers panneaux latéraux peuvent comporter des moyens de maintien pour les maintenir seuls dans une position debout sur la base alors que les seconds panneaux latéraux sont totalement dépliés vers l'extérieur.

La caisse peut comporter au moins un système de verrouillage d'au moins deux panneaux articulés adjacents.

De préférence les quatre panneaux latéraux peuvent être verrouillés en position lorsque la caisse est montée.

Les panneaux articulés peuvent se rabattre vers l'intérieur ou vers l'extérieur.

Chaque premier panneau est par exemple mobile entre une position repliée vers l'intérieur de la caisse, et la position debout seul.

Chacun des seconds panneaux latéraux peut être mobile entre une position où il est totalement déplié vers l'extérieur, et une position où il est replié vers l'intérieur de la caisse.

Par « totalement dépliés » vers l'extérieur, on entend que les panneaux sont au moins dépliés vers l'extérieur jusqu'à l'horizontale, voire jusqu'au sol.

Les moyens de maintien peuvent être agencés pour maintenir seul dans la position debout un des premiers panneaux latéraux alors que l'on déplace les seconds panneaux latéraux entre la position dans laquelle ils sont totalement dépliés vers l'extérieur, et une position dans laquelle ils sont repliés vers l'intérieur , et inversement.

### Moyens de maintien

Dans la position debout seul, le premier panneau latéral peut être sensiblement vertical.

Les moyens de maintien du premier panneau comportent un élément de jonction dont la partie inférieure est temporairement engagée dans l'extrémité supérieure d'un montant d'angle de la base pour maintenir le premier panneau latéral correspondant seul dans la position debout et dont la partie supérieure est engagée dans une ouverture de l'extrémité inférieure d'un montant latéral du premier panneau.

La partie supérieure de l'élément de jonction peut être fixée à l'intérieur du montant latéral par tout moyen adapté notamment par soudure et/ou à l'aide d'une goupille de fixation.

L'élément de jonction peut être plein ou creux.

L'élément de jonction peut être réalisé en métal, par exemple par usinage, moulage, coulage de métal fondu ou forgeage. Les arêtes de l'élément de jonction peuvent être arrondies, notamment lorsque l'élément de jonction est réalisé par coulage de métal fondu ou forgeage.

L'élément de jonction peut limiter le pivotement du premier panneau vers l'extérieur, autrement dit l'élément de jonction peut limiter l'angle d'ouverture α du premier panneau, ledit angle étant défini entre une position horizontale du premier panneau replié vers l'intérieur et la position debout seul.

Dans des exemples de réalisation, un premier panneau latéral lorsqu'il se maintient seul debout peut présenter un angle d'ouverture α strictement supérieur à 90°, en particulier compris entre 90° et 120°, notamment supérieur ou égal à 95°.

De préférence un, voire les deux, premiers panneaux latéraux ne comportent aucun élément de blocage mécanique pouvant empêcher le pliage dudit panneau vers l'intérieur de la caisse à partir de la position montée ou de la position debout.

Par rapport aux caisses connues, ceci permet d'éliminer la nécessité de soulever les panneaux ou même de les démonter pour pouvoir les replier. La manipulation de la caisse est alors simplifiée.

Le montant d'angle peut comporter, par exemple, une échancrure sur une face interne adjacente à un second panneau lorsque la caisse est montée, ladite échancrure permettant le basculement du premier panneau avec l'élément de jonction toujours engagé dans la partie inférieure du montant latéral du premier panneau.

Dans la position debout du panneau latéral, la partie inférieure de l'élément de jonction appuie sur la paroi intérieure du montant d'angle se trouvant en prolongement du montant latéral. Lorsqu'on replie le premier panneau vers l'intérieur la partie inférieure de l'élément de jonction s'éloigne de la paroi intérieure du montant d'angle, et vient se positionner, à mesure que le premier panneau bascule vers l'intérieur, dans l'échancrure du montant d'angle.

### Moyens de renfort

De façon connue, les panneaux latéraux et la base peuvent comporter chacun une ossature métallique et des plaques, également métalliques, fixées sur l'ossature métallique.

L'ossature métallique, par exemple en acier ou en aluminium, peut comporter, outre des montants verticaux latéraux et des traverses horizontales inférieures et supérieures, des renforts verticaux entre les traverses inférieures et supérieures.

La base peut comporter en outre une pluralité de taquets de retenue, disposés sur au moins l'un de ses côtés, et agencés de telle sorte que les panneaux latéraux correspondants puissent venir en appui contre eux, notamment lorsque la pression de la marchandise à l'intérieur de la caisse est importante.

Les taquets de retenue sont par exemple conformes à ceux décrits dans la demande WO 2004/108542.

La base peut comporter un ou plusieurs taquets de retenue sur chacun de ses côtés.

La base peut ne comporte aucun taquet sur au moins l'un de ses côtés.

La présence ou non de taquets, leur nombre et leur positionnement ne sont pas limitatifs de l'invention.

La caisse peut comporter des moyens supplémentaires pour renforcer les panneaux latéraux et la base.

La pression exercée lorsque la caisse est remplie est particulièrement importante en bas de la caisse, notamment au niveau des coins. Alors que les moyens de renforts verticaux existants dans les caisses usuelles sont répartis sur la largeur des panneaux latéraux, la caisse peut comporter des moyens de renfort supplémentaires, en particulier agencés pour renforcer les coins en bas de la caisse.

Les moyens de renfort supplémentaires peuvent être situés sur les premiers panneaux latéraux afin de ne pas gêner le mouvement des seconds panneaux entre la position totalement dépliés vers l'extérieur, et la position repliée vers l'intérieur, et inversement.

Un premier panneau latéral peut comporter par exemple un renfort tubulaire vertical supplémentaire, notamment attenant à un renfort vertical du premier panneau.

Dans une réalisation préférée, un premier panneau latéral comporte au moins un renfort vertical tubulaire d'angle, notamment accolé à un montant latéral du premier panneau.

Le renfort tubulaire d'angle peut ne pas monter jusqu'en haut du montant, en particulier ne pas monter jusqu'au niveau du système de verrouillage.

Le renfort tubulaire du premier panneau peut être de section rectangulaire ou carrée.

Il peut descendre jusqu'au niveau de la traverse horizontale inférieure du premier panneau.

La présence d'au moins un renfort tubulaire est particulièrement avantageuse lorsque le panneau latéral ne comporte aucun taquet de retenue.

Par rapport à un taquet de retenue tel que connu de l'art antérieur, un renfort tubulaire d'angle du premier panneau présente l'avantage de faciliter également le maintien debout seul du premier panneau. En particulier lorsque le premier panneau latéral seul debout présente un angle d'ouverture strictement supérieur à 90°, le renfort d'angle compense en partie les forces tendant à ouvrir le premier panneau et à le déplier vers l'extérieur.

Dans un exemple de caisse selon l'invention, les premiers panneaux ne peuvent pas être totalement dépliés vers l'extérieur.

La caisse peut comporter une cornière solidaire d'un premier panneau latéral et apte à renforcer latéralement le second panneau latéral adjacent.

La cornière peut comporter un profilé, notamment en forme de « L ».

La cornière peut être agencée pour venir recouvrir, au moins en partie, sur deux côtés le montant latéral du second panneau latéral adjacent lorsque les premier et second panneaux latéraux adjacents sont montés et verrouillés. La cornière renforce ainsi le second panneau dont le montant latéral reste plus facilement accolé au montant latéral du premier panneau.

La cornière peut être solidaire d'un montant latéral du premier panneau latéral. La cornière peut commencer en haut du montant latéral du premier panneau. Elle peut descendre jusqu'en bas du montant latéral du premier panneau.

Dans une variante, la cornière est interrompue et ne descend pas jusqu'en bas du montant latéral du premier panneau.

Dans un exemple de réalisation la cornière se termine par une forme en biseau, dirigée vers le bas du montant du premier panneau.

Une cornière ne descendant pas jusqu'en bas du montant latéral du premier panneau et/ou se terminant biseau dirigée vers le bas du montant du premier panneau n'entrave pas le mouvement des seconds panneaux latéraux et facilite la manipulation de la caisse.

La cornière ainsi solidaire du montant d'un premier panneau renforce un second panneau sur le côté lorsque la caisse est montée.

Le montant est par exemple fabriqué avec la cornière ou celle-ci peut être réalisée à l'aide d'un élément rapporté.

Les moyens de renfort de la base peuvent être formés par pliage d'une tôle et/ou par un élément rapporté.

La base peut comporter des plaques métalliques fixées sur une ossature également métallique comportant des moyens de renfort.

Les moyens de renfort de la base peuvent être disposés transversalement et/ou diagonalement.

Les plaques et les moyens de renfort peuvent former le fond de la caisse.

Les renforts transversaux sont par exemple tubulaires, de section variée par exemple carrée, rectangulaire, demi-circulaire, circulaire, cette liste étant non limitative.

Les renforts diagonaux sont par exemple formés d'un profilé, par exemple de section en forme de U, en forme de Ω....

La présence de renforts transversaux permet d'avoir des renforts diagonaux relativement courts donc moins sensibles à la flexion et plus efficaces pour maintenir la rigidité de la base de la caisse. L'épaisseur maximale du fond de la caisse peut ainsi être réduite par rapport à celle des caisses généralement utilisées sans risque de déformation supplémentaire, ce qui permet d'augmenter la charge à l'intérieur d'une caisse

Le fond présente par exemple une épaisseur maximale inférieure ou égale à 15 mm.

Dans une variante particulière la base est de forme générale sensiblement rectangulaire et les deux premiers panneaux latéraux correspondent par exemple aux grands côtés de la base et les deux seconds panneaux latéraux aux petits côtés. De façon alternative, les deux premiers panneaux latéraux peuvent correspondre aux petits côtés de la base et les deux seconds panneaux latéraux aux grands côtés sans que l'on sorte du cadre de la présente invention. Dans une variante, la caisse comporte quatre panneaux de largeurs similaires, étant par exemple sensiblement cubique.

### Pieds

La caisse peut comporter des pieds, notamment un pied à chaque coin de la base.

Chaque pied peut comporter deux décrochements, notamment deux décrochements généralement perpendiculaires entre eux, par exemple tels que décrits dans la demande WO 2004/108542.

Les pieds peuvent comporter chacun un socle inférieur horizontal, notamment de forme allongée selon un axe parallèle aux premiers panneaux latéraux, comportant deux côtés sensiblement perpendiculaires qui se raccordent aux décrochements.

De façon classique, on utilise pour gerber les caisses, vides ou remplies, un chariot élévateur ou un transpalette manuel. En revanche pour le transport des caisses, avant ou après les opérations de chargement et/ou déchargement du container, il peut être avantageux d'utiliser un convoyeur rouleau. La forme allongée des socles est particulièrement avantageuse pour le transport par convoyeur rouleau, les caisses transportées sont plus stables qu'avec des socles dont les côtés sont sensiblement égaux.

Dans un exemple de mise en oeuvre préférentiel de l'invention, les dimensions de la caisse sont choisies de telle sorte que l'on puisse gerber neuf caisses à l'état replié ou deux caisses à l'état déplié dans un conteneur maritime, de dimensions standards, et que deux caisses puissent tenir de front dans ce conteneur.

Selon un autre de ses aspects, l'invention a pour objet un élément de jonction agencé pour maintenir seul debout un premier panneau latéral d'une caisse telle que définie précédemment.

Selon encore un autre aspect, l'invention a pour objet un procédé de vidage d'une caisse telle que définie précédemment, remplie d'un matériau, notamment d'un matériau sensible au fluage, le vidage étant effectué, au moins en partie, alors que au moins un des premiers panneaux latéraux est dans une position debout seul, et que les seconds panneaux latéraux sont totalement dépliés vers l'extérieur.

Le vidage est par exemple effectué, au moins en partie, alors que les deux premiers panneaux latéraux tiennent seuls en une position montée sur la base et les deux seconds panneaux latéraux sont dépliés vers l'extérieur.

Pour pouvoir déplier les seconds panneaux alors que la caisse est montée, en particulier pour le transport et contient par exemple des balles d'un matériau, il suffit de déverrouiller les panneaux latéraux.

Les seconds panneaux sont dépliés vers l'extérieur de préférence quand les deux premiers panneaux sont debout. La caisse peut ensuite être facilement vidée.

Selon un exemple de procédé selon l'invention, une fois la caisse vidée, les seconds panneaux latéraux sont déplacés entre la position totalement dépliés vers l'extérieur, et la position repliée vers l'intérieur alors que les premiers panneaux latéraux se maintiennent seuls dans la position debout.

Chaque premier panneau latéral peut être ensuite replié vers l'intérieur sans avoir à soulever ni démonter ledit panneau.

Dans une réalisation particulière, un élément de jonction comporte une partie supérieure engagée notamment de façon inamovible, dans la partie inférieure d'un montant latéral d'un premier panneau.

L'invention pourra être mieux comprise à la lecture de la description détaillée qui va suivre, d'un exemple non limitatif de mise en oeuvre de celle-ci, ainsi qu'à l'examen du dessin annexé, sur lequel :
- la figure 1 représente de manière schématique, en perspective, une caisse conforme à l'invention,
- les figures 2A et 2B, illustrent en perspective et en vue de dessus le détail II de la figure 1
- la figure 3A est une vue en perspective schématique de la caisse de la figure 1, les deux premiers panneaux latéraux étant en position debout et les deux seconds panneaux latéraux étant totalement rabattus vers l'extérieur, jusqu'au sol,
- les figures 3B et 3C sont des vues de face de la caisse de la figure 1, les deux premiers panneaux latéraux étant en position debout avant, respectivement pendant, le rabattement du second panneau latéral visible vers l'extérieur,
- les figures 4A à 4F montrent différentes vues du détail IV de la figure 1,
- les figures 4G et 4H représentent, de façon isolée, de côté et en perspective un élément de jonction pouvant être utilisé dans un exemple de l'invention,
- la figure 5A représente de manière schématique, en vue de dessous, la base de la caisse de la figure 1,
- la figure 5B représente en coupe le détail V_{B} de la figure 5A,
- la figure 6 représente, en perspective vue de dessous, un pied de la caisse de la figure 1,
- la figure 7 représente une caisse selon l'invention lors de son transport par convoyeur rouleau,
- la figure 8 représente de manière schématique, en vue de face, deux caisses gerbées à l'état monté,
- la figure 9 représente de manière schématique, en perspective, deux caisses gerbées à l'état replié, et
- la figure 10 représente de façon isolée un pion pouvant être utilisé dans un exemple de l'invention.

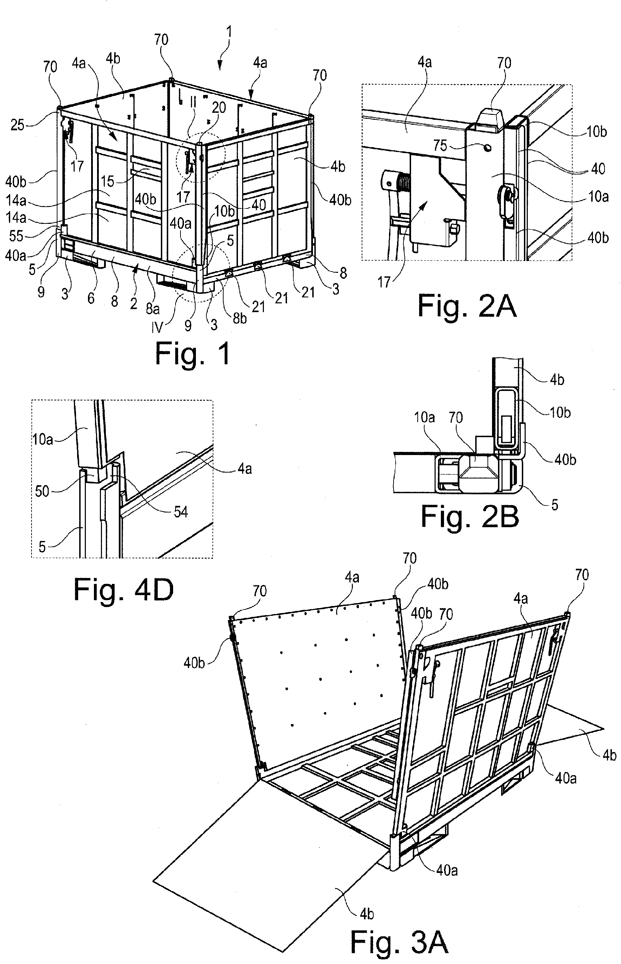

On a représenté à la figure 1 un exemple de caisse repliable 1, en acier, à l'état monté, comportant une base 2, reposant sur quatre pieds 3 et comportant deux premiers panneaux latéraux 4a et deux seconds panneaux latéraux 4b opposés deux à deux.

Dans l'exemple illustré, les quatre panneaux sont amovibles relativement à la base 2 et articulés sur la base 2 autour d'axes géométriques de rotation horizontaux. Chaque panneau comporte dans l'exemple illustré des éléments d'articulation tels que décrits dans la demande WO 2004/108542.

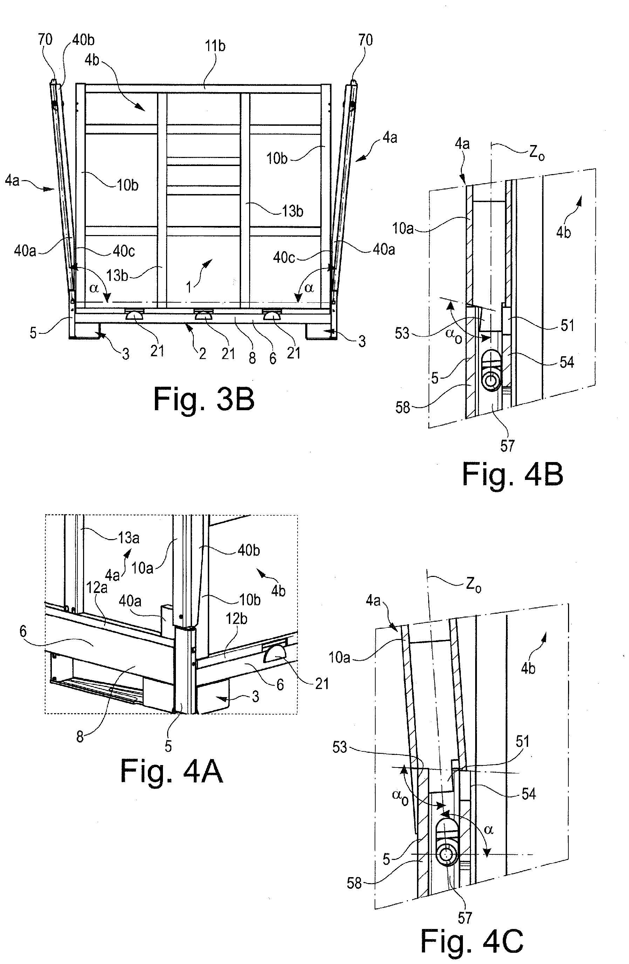

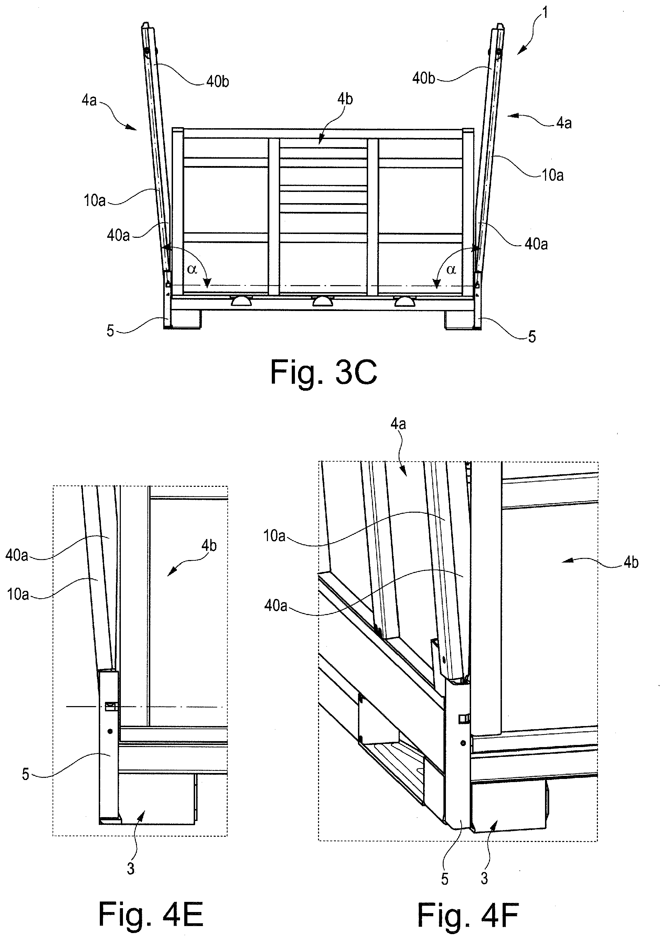

Les premiers et les seconds panneaux articulés 4a et 4b peuvent ainsi se rabattre vers l'intérieur de la caisse en une position totalement repliée. Les seconds panneaux 4b peuvent également se rabattre vers l'extérieur de la caisse, comme illustré par exemple à la figure 3. Les axes géométriques d'articulation des panneaux se situent à des hauteurs différentes, de manière à permettre de rabattre les panneaux les uns sur les autres lorsque la caisse est repliée.

Des systèmes de verrouillage 17 sont prévus pour maintenir les panneaux 4 ensemble et verticaux quand la caisse est montée. Chaque système de verrouillage 17 peut par exemple être tel que décrit dans la demande WO 2004/108542.

La figure 2A montre les systèmes de verrouillage 17 lorsque la caisse est montée.

Les panneaux latéraux 4a et 4b comportent chacun une ossature métallique, en acier dans l'exemple considéré, comprenant des montants verticaux latéraux 10a et 10b et des traverses horizontales inférieures 12a - 12b et supérieures 11a et 11b, constituées de profilés métalliques en acier galvanisé, dans l'exemple illustré.

L'ossature métallique comprend en outre des renforts verticaux 13a et 13b qui relient les traverses 11a et 12a, respectivement 11b et 12b. Des plaques en acier galvanisé 14a et b sont fixées sur l'ossature métallique.

La base 2 comporte deux taquets 21 sur ses seconds côtés 8b et aucun taquet sur les premiers côtés 8a.

Chaque montant latéral 10a des premiers panneaux latéraux 4a s'étend, lorsque la caisse est en position verrouillée comme illustré figure 1, dans le prolongement d'un montant d'angle 5 de la base 2. Les montants d'angle 5 sont constitués dans l'exemple illustré par des profilés de section sensiblement rectangulaire, creux et verticaux. Les montants d'angle 5 sont reliés, sur les côtés 8 de la base 2, par des traverses horizontales 6.

La partie inférieure 50a d'un élément de jonction 50 est engagée dans l'extrémité supérieure d'un montant d'angle 5 de la base 2. La partie supérieure 50b de l'élément de jonction 50 est engagée dans une ouverture de l'extrémité inférieure du montant latéral 10a du premier panneau 4a afin de le maintenir debout.

De préférence la partie supérieure 50b de l'élément de jonction 50 reste engagée dans l'extrémité du montant latéral 10a d'un premier panneau lors de la manipulation de la caisse, en particulier des opérations de montage et pliage.

De façon optionnelle, l'élément de jonction 50 peut être fixé à l'aide d'une goupille engagée et soudée dans l'alésage 55 du montant latéral 10.

Des cornières 40b formées par exemple d'un profilé en forme de « L » sont solidaires des montants 10a des premiers panneaux 4a. On voit figure 2 que la cornière 40b vient recouvrir deux côtés du montant latéral 10b du second panneau 4b. Les cornières 40b renforcent sur les côtés les seconds panneaux 4b lorsque la caisse est montée comme illustré sur la figure 1.

Les cornières 40b de l'exemple illustré partent du haut des montants 10a et se terminent par une forme en biseau 40a en bas dudit montant. Lorsque le premier panneau latéral 4a se maintient seul debout, la forme en biseau 40a de la cornière 40b peut présenter un bord extérieur 40c vertical, comme illustré figure 3B.

Dans l'exemple illustré, chaque montant latéral 10a d'un premier panneau 4a est coiffé d'un pion 70, engagé inférieurement dans la partie supérieure du profilé constituant le montant latéral 10a considéré. De façon optionnelle, le pion 70 peut comporter un alésage 72 et être fixé à l'aide d'une goupille engagée et soudée dans l'alésage 72 et un alésage 75 du montant latéral 10a.

Le pion 70 peut être plein ou creux.

Le pion 70 peut être réalisé en métal, par exemple par moulage, coulage de métal fondu ou forgeage. Les arêtes du pion 70 peuvent être arrondies, en particulier lorsque le pion est réalisé par coulage de métal fondu ou forgeage.

Alors que la figure 1 représente les quatre panneaux latéraux verrouillés en position verticale, sur la figure 3A les deux premiers panneaux latéraux tiennent seuls debout en position sensiblement verticale et les deux seconds panneaux latéraux sont totalement rabattus vers l'extérieur, jusqu'à toucher le sol ou la surface sur laquelle la caisse est posée.

Lorsqu'il est dans cette position, debout non verrouillé, le premier panneau latéral 4a présente un angle d'ouverture α supérieur à 95°, ledit angle α étant mesuré entre une position horizontale pliée vers l'intérieur et la position debout montée, libre, c'est-à-dire non verrouillée ni tenue. Plus généralement l'angle d'ouverture peut être compris entre 90° et 120°.

Cette ouverture au delà de la verticale favorise la stabilité de cette position du premier panneau latéral et permet également de déplacer les seconds panneaux latéraux entre la position dépliée vers l'extérieur représentée figure 3A et une position verticale non verrouillée illustrée figure 3B et une position pliée vers l'intérieur et, tout en gardant les premiers panneaux latéraux 4a debout.

Ceci est particulièrement avantageux pour le déchargement des caisses qui peut s'effectuer avec les panneaux latéraux dans la position de la figure 3A. Il est en particulier beaucoup plus facile d'atteindre la couche inférieure de marchandises, par exemple de balles de caoutchouc, lorsque les seconds panneaux sont ainsi dépliés vers l'extérieur, les premiers panneaux étant debout.

La figure 3B montre que la forme en biseau des cornières 40b permet de faire pivoter sans gène les seconds panneaux alors que les premiers panneaux tiennent debout seuls en une position formant avec la position horizontale, pliée vers l'intérieur de la caisse, un angle α strictement supérieur à 90°, égal à 95° dans l'exemple illustré.

Alors que la figure 4A illustre en perspective le détail IV de la figure 1, les figures 4B et 4C montrent des coupes partielles du montant latéral 10a du premier panneau 4a et du montant d'angle 5 entre lesquels est positionné l'élément de jonction 50. Sur la coupe partielle de la figure 4D, seul le montant d'angle 5 est coupé.

L'élément de jonction 50 illustré comporte une partie supérieure 50b de section par exemple sensiblement carrée et une partie inférieure 50a.

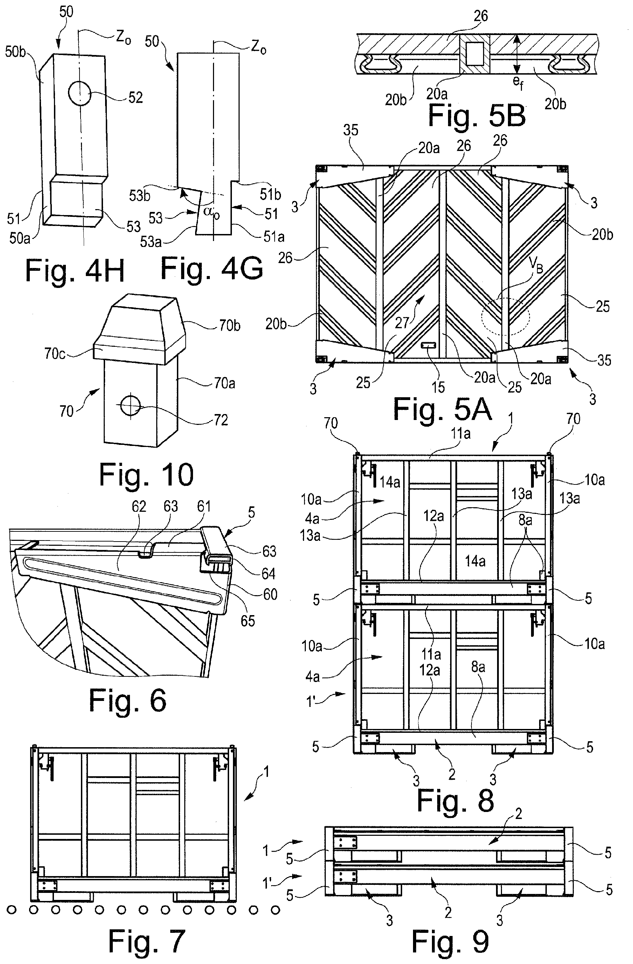

La partie inférieure 50a de l'élément de jonction 50 peut comporter deux décrochements 51 et 53 comme illustré figures 4G et 4H.

Le premier décrochement 51 peut former comme dans l'exemple illustré deux côtés plans perpendiculaires, un grand côté 51a parallèle à l'axe longitudinal Z₀ de l'élément de jonction et un petit côté 51b qui lui est perpendiculaire.

Le premier décrochement 51 permet d'éviter un blocage mécanique pouvant gêner le pliage du premier panneau vers l'intérieur de la caisse.

Le deuxième décrochement 53 peut former comme dans l'exemple illustré deux côtés plans, un petit côté 53b et un grand côté 53a qui lui est perpendiculaire.

Le petit côté 53b peut être tel qu'il définisse avec l'axe longitudinal Z₀ de l'élément de jonction un angle α₀ strictement supérieur à 90°, notamment égal à 95°.

L'angle α₀ limite le pivotement du montant d'angle et correspond à un angle maximum d'ouverture du premier panneau lorsque celui-ci se maintient seul en position debout.

L'angle α₀ peut être compris entre 90° et 120°.

Dans la position montée de la caisse 1 avec les panneaux latéraux 4 verrouillés, l'élément de jonction 50 est en prolongement du montant latéral 10a comme illustré figure 4B.

Dans la position debout seul du panneau latéral, comme illustré figure 4C, la partie inférieure 50a de l'élément de jonction 50, en particulier le décrochement 53, appuie sur la paroi extérieure 58 du montant d'angle 5 se trouvant en prolongement du montant latéral 10a.

Le montant d'angle 5 comporte également une échancrure 54, agencée pour faciliter le passage de l'élément de jonction 50 fixé dans le montant latéral 10a, lorsque le premier panneau 4a est déplacé pour être replié vers l'intérieur de la caisse.

L'élément de jonction 50 illustré est réalisé par coulage de métal fondu; il comporte dans sa partie supérieure 50b un alésage 52 agencé pour recevoir une goupille de fixation pour maintenir l'élément de jonction à l'intérieur du montant latéral 10a lors des manipulations de la caisse, montée ou repliée, vide ou pleine.

Au moins un porte-étiquette 15 peut également être fixé sur au moins un panneau 4 comme illustré figure 1, voire sous la base 2 comme le montre la figure 5.

La base 2 de la caisse illustrée est de forme générale rectangulaire, les premiers panneaux, correspondant aux grands côtés de la base, ont par exemple une épaisseur maximale eₐ d'environ 30 mm, tandis que les seconds panneaux 4b, correspondant aux petits côtés, sont par exemple d'une épaisseur maximale e_{b} d'environ 20 mm.

La base 2 comporte un fond 27. Des moyens de renfort transversaux 20a formés de profilés divisent le fond en quatre parties 25, correspondant chacune à une plaque métallique 26. De préférence les parties 25 sont de dimensions identiques mais on ne sort pas du cadre de l'invention avec un nombre différent de parties 25 ou avec des parties 25 non égales.

Entre ces renforts transversaux 20a, le fond 27 comporte des renforts diagonaux 20b. Les plaques 26 sont soudées aux renforts transversaux 20a et aux renforts diagonaux 20b.

Comme illustré figure 5B, les renforts transversaux 20a sont dans ce mode de réalisation des renforts tubulaires de section rectangulaire et les renforts diagonaux 20b sont constitués de profilés en acier de section transversale en Ω.

La combinaison de renforts transversaux et diagonaux permet d'avoir une caisse résistante avec une épaisseur maximale du fond de la caisse e_{f} relativement faible comparée à celle des caisses de l'art antérieur. L'épaisseur maximale du fond est mesurée en coupe transversale comme illustré figure 5B. Dans l'exemple considéré, le fond a une épaisseur maximale e_{f} égale à 15 mm. Les fonds des caisses connues ont souvent des épaisseurs voisines de 30mm.

La figure 6 montre que chaque pied 3 comporte un socle 62 de forme allongée selon un axe parallèle aux premiers panneaux latéraux. Chaque socle peut avoir la forme générale d'un triangle rectangle ou d'un trapèze rectangle comme illustré.

Un pied 3 a été représenté sur la figure 6 en vue de dessous. Il comporte deux côtés sensiblement perpendiculaires 60 et 61. Un socle 62 relie les côtés 60 et 61.

Le socle 62 comporte au moins une ouverture 63, deux dans l'exemple illustré, permettant à un liquide de s'écouler, notamment lors de l'étape de galvanisation de l'acier constituant la caisse.

Le montant d'angle 5 comporte une encoche 65 dans sa partie inférieure, cette encoche 65 étant formée latéralement vers l'intérieur de la caisse, dans l'exemple illustré.

L'encoche 65 peut être agencée pour recevoir au moins partiellement la partie supérieure d'un pion 70 lors du gerbage de caisses comme expliqué plus loin.

Le montant d'angle 5 est en retrait par rapport au socle 62, ce qui lui évite de reposer sur le sol et permet également un certain verrouillage d'une caisse sous-jacente lorsque deux caisses à l'état replié sont gerbées, l'extrémité supérieure d'un montant d'angle 5 de la caisse sous-jacente venant se positionner dans le retrait.

Alors que la forme généralement triangulaire isocèle rectangle des socles des pieds des caisses connues rend peu stable le transport par convoyeur rouleau, dans l'exemple illustré, la forme allongée du socle permet que le pied repose toujours au moins sur deux rouleaux lors du transport par convoyeur rouleau comme le montre la figure 7, ce qui rend la caisse transportée plus stable et donc ce mode de transport plus fiable.

Les figures 8 et 9 représentent deux caisses 1 et 1' gerbées, respectivement à l'état monté et à l'état replié.

La figure 8 montre des pions 70 engagés dans l'extrémité supérieure des montants latéraux 10a des premiers panneaux 4a.

Comme on le voit figure 10, chaque pion 70 peut comporter une partie supérieure 70b de forme semi-pyramidale qui forme un décrochement par rapport à un support 70c de forme sensiblement carrée et une partie inférieure 70a agencée pour s'engager en haut d'un montant latéral 10a d'un premier panneau 4a. On ne sort pas du cadre de la présente invention si la forme du pion 70 est différente, par exemple.

A l'état monté comme sur la figure 8, les parties supérieures 70b de forme semi-pyramidale des pions 70 de la caisse inférieure 1' sont engagées dans les encoches 65 des montants d'angle 5 de la caisse supérieure 1.

Bien entendu, l'invention n'est pas limitée aux exemples de réalisation qui viennent d'être décrits, et l'on peut notamment modifier les dimensions relatives des panneaux et de la base.

L'expression « comportant un » doit se comprendre comme étant synonyme de « comportant au moins un ».

## Revendications

1. Caisse (1) métallique repliable, notamment de transport d'un matériau sensible au fluage, comportant :
a. une base (2),
b. deux premiers et deux seconds panneaux latéraux (4a, 4b) opposés, articulés sur la base (2), au moins l'un des premiers panneaux latéraux (4a) comportant des moyens de maintien pour le maintenir seul dans une position debout sur la base (2) alors que les seconds panneaux latéraux (4b) sont totalement dépliés vers 1'extérieur **caractérisé en ce que**, les moyens de maintien comportent un élément de jonction (50) dont :
- la partie inférieure (50a) est temporairement engagée dans l'extrémité supérieure d'un montant d'angle (5) de la base (2) pour maintenir le premier panneau latéral correspondant seul dans la position debout et
- la partie supérieure (50b) est engagée dans une ouverture (15a) de l'extrémité inférieure d'un montant latéral (10a) du premier panneau (4a).

2. Caisse selon la revendication 1, les moyens de maintien étant agencés pour maintenir seul dans la position debout au moins l'un des premiers panneaux latéraux (4a) indépendamment du déplacement des seconds panneaux latéraux (4b) entre la position dans laquelle ils sont totalement dépliés vers l'extérieur, et une position dans laquelle ils sont repliés vers l'intérieur, et du déplacement inverse.

3. Caisse selon la revendication 1 ou 2, au moins l'un des premiers panneaux latéraux (4a) présentant lorsqu'il est maintenu seul dans la position debout, un angle d'ouverture α strictement supérieur à 90°, en particulier compris entre 90° et 120°, notamment supérieur ou égal à 95°, ledit angle étant mesuré entre une position horizontale du premier panneau replié vers l'intérieur et la position debout seul.

4. Caisse selon l'une quelconque des revendications précédentes, la partie supérieure (50b) de l'élément de jonction étant fixée dans ladite ouverture (15a) de l'extrémité inférieure du montant latéral (10a) du premier panneau (4a).

5. Caisse selon l'une quelconque des revendications précédentes, les moyens de maintien étant agencés pour permettre, sans avoir à le soulever ni le démonter, de replier le premier panneau latéral correspondant entre la position debout, et une position dans laquelle il est replié vers l'intérieur.

6. Caisse selon l'une quelconque des revendications précédentes, comportant une cornière (40b) solidaire d'un premier panneau latéral (4a) et apte à renforcer latéralement le second panneau latéral (4b) adjacent,
la cornière (40) comportant un profilé, notamment en forme de « L », solidaire d'un montant latéral (10a) du premier panneau latéral (4a), et agencée pour venir recouvrir, au moins en partie, deux côtés du montant latéral (10b) du second panneau latéral (4b) adjacent lorsque les premier et second panneaux latéraux (4a, 4b) adjacents sont montés et verrouillés,
la cornière étant interrompue en bas du montant (10a) et/ou se terminant par une forme en biseau (40a) inclinée vers le bas du montant (10a),
la cornière commençant notamment en haut du montant (10a).

7. Caisse selon l'une quelconque des revendications précédentes, la base présentant une épaisseur maximale e_{b}, inférieure ou égale à 15 mm.

8. Caisse selon l'une quelconque des revendications précédentes, comportant des pieds (3), notamment un pied à chaque coin de la base.

9. Caisse selon la revendication précédente, les pieds (3) comportant chacun un socle (62) de forme allongée selon un axe parallèle aux premiers panneaux latéraux.

10. Caisse selon l'une quelconque des revendications précédentes, la base (2) étant de forme sensiblement rectangulaire, les deux premiers et seconds panneaux latéraux (4a, 4b) correspondant respectivement aux grands côtés (2a) et aux petits côtés (2b) de la base.

11. Procédé de vidage d'une caisse selon l'une quelconque des revendications 1 à 9, remplie d'un matériau, notamment sensible au fluage,
le vidage étant effectué, au moins en partie, alors qu'au moins l'un des premiers panneaux latéraux (4a) est maintenu dans une position debout seul à l'aide de l'élément de jonction (50) des moyens de maintien, élément de jonction (50) dont
- la partie inférieure (50a) est temporairement engagée dans l'extrémité supérieure d'un montant d'angle (5) de la base (2) pour maintenir le premier panneau latéral correspondant seul dans la position debout et
- la partie supérieure (50b) est engagée dans une ouverture (15a) de l'extrémité inférieure d'un montant latéral (10a) du premier panneau (4a),
et que les seconds panneaux latéraux (4b) sont totalement dépliés vers l'extérieur.

## Patentansprüche

1. Faltbarer Metallkasten (1), insbesondere für den Transport eines kriechfähigen Materials, umfassend:
a. eine Basis (2),
b. zwei erste und zwei zweite gegenüberliegende Seitenplatten (4a, 4b), die schwenkbar an der Basis (2) befestigt sind, wobei zumindest eine der ersten Seitenplatten (4a) Haltemittel zum Halten derselben alleine in einer aufrechten Position auf der Basis (2), während die zweiten Seitenplatten (4b) vollständig nach außen geklappt sind, umfasst, **dadurch gekennzeichnet, dass** die Haltemittel ein Verbindungselement (50) umfassen, von welchem:
- der untere Teil (50a) zeitweise im Eingriff mit einem oberen Ende einer Winkelstütze (5) der Basis (2) steht, um die entsprechende erste Seitenplatte allein in der aufrecht stehenden Position zu halten, und
- der obere Teil (50b) im Eingriff mit einer Öffnung (15a) des unteren Endes einer Querstütze (10a) der ersten Platte (4a) steht.

2. Kasten nach Anspruch 1, wobei die Haltemittel dazu vorgesehen sind, zumindest eine der ersten Seitenplatten (4a) alleine in der aufrechten Position zu halten, und zwar unabhängig von der Bewegung der zweiten Seitenplatten (4b) zwischen der Position, in welcher diese vollständig nach außen geklappt sind und einer Position, in welcher diese nach innen geklappt sind und der entgegengesetzten Bewegung.

3. Kasten nach Anspruch 1 oder 2, wobei zumindest eine der ersten Seitenplatten (4a) dann, wenn sie allein in der aufrechten Position gehalten wird, einen Öffnungswinkel α zeigt, der echt größer als 90° ist, insbesondere zwischen 90° und 120° liegt, insbesondere größer oder gleich 95° ist, wobei dieser Winkel zwischen einer horizontalen Position, in welcher die erste Platte nach innen gefaltet ist, und der alleinstehenden aufrechten Position gemessen ist.

4. Kasten nach einem der vorhergehenden Ansprüche, wobei der obere Teil (50b) des Verbindungselements in der Öffnung (15a) des unteren Endes der Querstütze (10a) der ersten Platte (4a) fixiert ist.

5. Kasten nach einem der vorhergehenden Ansprüche, wobei die Haltemittel dazu ausgelegt sind, ein Umklappen der ersten entsprechenden Seitenplatte zwischen der aufrechten Position und der Position, in welcher sie nach innen geklappt ist, zu ermöglichen, ohne diese entfernen oder demontieren zu müssen.

6. Kasten nach einem der vorhergehenden Ansprüche, umfassend einen Anschlusswinkel (40b), der mit einer ersten Seitenplatte (4a) fest verbunden ist und die benachbarte zweite Seitenplatte (4b) verstärken kann,
wobei der Anschlusswinkel (40) ein Profil umfasst, insbesondere L-förmig, welches fest mit einer Querstütze (10a) der ersten Seitenwand (4a) verbunden ist und dazu ausgelegt ist, zumindest teilweise zwei Seiten der Querstütze (10b) der zweiten, benachbarten Seitenwand (4b) zu bedecken, während die ersten und zweiten benachbarten Seitenwände (4a, 4b) montiert und verriegelt sind,
wobei der Anschlusswinkel unterhalb der Stütze (10a) unterbrochen ist und/oder in einer in Richtung des unteren Endes der Stütze (10a) geneigten Schrägfläche (40a) endet,
wobei der Anschlusswinkel insbesondere oberhalb der Stütze (10a) beginnt.

7. Kasten nach einem der vorhergehenden Ansprüche, wobei die Basis eine maximale Breite e_{b} von 15 mm oder weniger hat.

8. Kasten nach einem der vorhergehenden Ansprüche, umfassend Füße (3), insbesondere einen Fuß an jeder Ecke der Basis.

9. Kasten nach dem vorhergehenden Anspruch, wobei die Füße (3) jeweils einen Sockel (62) von länglicher Form entlang einer parallel zu den ersten Seitenplatten verlaufenden Achse umfasst.

10. Kasten nach einem der vorhergehenden Ansprüche, wobei die Basis (2) eine im Wesentlichen rechteckige Form hat und die beiden ersten und zweiten Seitenplatten (4a, 4b) jeweils den langen Seiten (2a) und den kurzen Seiten (2b) der Basis entsprechen.

11. Verfahren zum Leeren eines Kastens nach einem der Ansprüche 1 bis 9, gefüllt mit einem Material, insbesondere einem kriechfähigen Material,
wobei das Leeren zumindest teilweise erfolgt, während zumindest eine der ersten Seitenplatten (4a) mit Hilfe des Verbindungselements (50) der Haltemittel in einer allein aufrecht stehenden Position gehalten wird, wobei in dem Verbindungselement (50):
- der untere Teil (50a) übergangsweise im Eingriff mit einem oberen Ende einer Winkelstütze (5) der Basis (2) steht, um die entsprechende erste Seitenplatte in der alleine aufrecht stehenden Position zu halten, und
- der obere Teil (50b) im Eingriff mit einer Öffnung (15a) des unteren Endes einer Querstütze (10a) der ersten Platte (4a) steht,
und die beiden zweiten Seitenplatten (4b) vollständig nach außen geklappt sind.

## Claims

1. A collapsible metal box (1), in particular for transporting a material that is susceptible to creep, comprising
a. a base (2),
b. two first and two second opposing side panels (4a, 4b) that are articulated to the base (2), at least one of the first side panels (4a) comprising holding means for holding it in a position standing by itself on the base (2) while the second side panels (4b) are folded out fully toward the outside **characterized in that** the holding means comprise a joining element (50) of which
- the lower part (50a) is temporarily inserted into the upper end of a corner upright (5) of the base (2) in order to hold the corresponding first side panel in the position standing by itself, and
- the upper part (50b) is inserted into an opening (15a) at the lower end of a side upright (10a) of the first panel (4a).

2. The box as claimed in claim 1, wherein the holding means are designed to hold at least one of the first side panels (4a) in the position standing by itself, independently of the movement of the second side panels (4b) between the position in which they are folded out fully toward the outside and a position in which they are folded in toward the inside, and of the movement in the opposite direction.

3. The box as claimed in claim 1 or 2, wherein at least one of the first side panels (4a), when it is held in the position standing by itself, is at an opening angle α of strictly greater than 90°, in particular between 90° and 120°, in particular greater than or equal to 95°, said angle being measured between a horizontal position of the first panel folded in toward the inside and the position standing by itself.

4. The box as claimed in any one of the preceding claims, wherein the upper part (50b) is fixed in said opening (15a) at the lower end of a side upright (10a) of the first panel (4a).

5. The box as claimed in any one of the preceding claims, wherein the holding means are designed to allow the corresponding first side panel to be folded in, without having to be lifted or removed, between the standing position and a position in which it is folded in toward the inside.

6. The box as claimed in any one of the preceding claims, comprising an angle bracket (40b) secured to a first side panel (4a) and able to laterally reinforce the adjacent second side panel (4b),
the angle bracket (40) comprising a profiled element, in particular in the shape of an "L", secured to a side upright (10a) of the first side panel (4a) and designed to cover, at least in part, two sides of the side upright (10b) of the adjacent second side panel (4b) when the adjacent first and second side panels (4a, 4b) are assembled and locked,
the angle bracket being interrupted at the bottom of the upright (10a) and/or ending with a beveled shape (40a) inclined toward the bottom of the upright (10a),
the angle bracket starting in particular at the top of the upright (10a).

7. The box as claimed in any one of the preceding claims, wherein the base has a maximum thickness eb less than or equal to 15 mm.

8. The box as claimed in any one of the preceding claims, comprising feet (3), in particular one foot at each corner of the base.

9. The box as claimed in the preceding claim, wherein the feet (3) each comprise a base plate (62) having an elongate shape along an axis parallel to the first side panels.

10. The box as claimed in any one of the preceding claims, wherein the base (2) has an approximately rectangular shape, the two first and second side panels (4a, 4b) corresponding respectively to the long sides (2a) and to the short sides (2b) of the base.

11. A method for emptying a box as claimed in any one of claims 1 to 9 which is filled with a material, in particular a material that is susceptible to creep,
wherein emptying is carried out, at least in part, while at least one of the first side panels (4a) is in a position standing by itself thanks to the joining element (50) of the holding means, joining element (50) of which
- the lower part (50a) is temporarily inserted into the upper end of a corner upright (5) of the base (2) in order to hold the corresponding first side panel in the position standing by itself, and
- the upper part (50b) is inserted into an opening (15a) at the lower end of a side upright (10a) of the first panel (4a),
and the second side panels (4b) are folded out fully toward the outside.
